(19) Europäisches Patentamt
European Patent Office
Office européen des brevets

(11) Veröffentlichungsnummer: **0 226 922**
**A2**

(12) # EUROPÄISCHE PATENTANMELDUNG

(21) Anmeldenummer: 86117008.2

(22) Anmeldetag: 08.12.86

(51) Int. Cl.[4]: C 08 L 69/00
C 08 L 55/02, C 08 L 35/06
C 08 K 5/52

(30) Priorität: 21.12.85 DE 3545609

(43) Veröffentlichungstag der Anmeldung:
01.07.87 Patentblatt 87/27

(84) Benannte Vertragsstaaten:
DE FR GB IT NL

(71) Anmelder: BAYER AG
Konzernverwaltung RP Patentabteilung
D-5090 Leverkusen 1 Bayerwerk(DE)

(72) Erfinder: Tödtemann, Gert
Neuenweg 5
D-5632 Wermelskirchen(DE)

(72) Erfinder: Reinking, Klaus, Dr.
Robert-Stolz-Strasse 16
D-5632 Wermelskirchen(DE)

(72) Erfinder: Koch, Otto, Dr.
Morgengraben 12
D-5000 Köln 80(DE)

(54) **Verfahren zur Herstellung thermoplastischer Formmassen mit flammwidrigen Eigenschaften.**

(57) Gegenstand der vorliegenden Erfindung ist ein Verfahren zur Herstellung von Formmassen bestehend aus halogenfreien aromatischen Polycarbonaten, halogenfreien "ABS"-Pfropfpolymerisaten, halogenfreien Maleinsäureanhydrid-Copolymerisaten, halogenfreien Phosphorverbindungen der Formel (I)

$$R_1-(O)_n-\overset{\overset{\displaystyle O}{\|}}{\underset{\underset{\displaystyle R_2}{|}}{\underset{\displaystyle (O)_n}{\underset{|}{P}}}}-(O)_n-R_3 \qquad (I)$$

und Tetrafluorethylenpolymerisaten, sowie gegebenenfalls weiteren bekannten Zusätzen.

EP 0 226 922 A2

BAYER AKTIENGESELLSCHAFT 5090 Leverkusen, Bayerwerk
Konzernverwaltung RP
Patentabteilung PG/Kü-c

# Verfahren zur Herstellung thermoplastischer Formmassen mit flammwidrigen Eigenschaften

Gegenstand der deutschen Patentanmeldung P 3 512 638.8 (Le A 23 759) sind thermoplastische Formmassen bestehend aus

a) 20 bis 85 Gew.-Teilen eines thermoplastischen aromatischen Polycarbonats,

B) 5 bis 50 Gew.-Teilen eines Pfropfpolymerisats aus

B)1) 5 bis 90 Gew.-Teilen, vorzugsweise 30 bis 80 Gew.-Teilen einer Mischung aus

B)1)1) 50 bis 95 Gew.-% Styrol, α-Methylstyrol, kernsubstituiertem Styrol, Methylmethacrylat oder Mischungen daraus, und

B)1)2) 50 bis 5 Gew.-% (Meth)Acrylnitril, Methylmethacrylat, Maleinsäureanhydrid, N-substituiertem Maleinimid oder Mischungen daraus, auf

B)2) 95 bis 10 Gew.-Teile, vorzugsweise 70 bis 20 Gew.-Teile, eines Kautschuks mit einer Glastemperatur $T_G \leq 10^0 C$,

C) 5 bis 70 Gew.-Teilen eines thermoplastischen Copolymerisats aus

C)1) 50 bis 95 Gew.-% Styrol, α-Methylstyrol, kernsubstituiertem Styrol, Methylmethacrylat oder Mischungen daraus, und

C)2) 50 bis 5 Gew.-% (Meth)Acrylnitril, Methylmethacrylat, Maleinsäureanhydrid, N-substituiertem Maleinimid oder Mischungen daraus, und gegebenenfalls

D) 3 bis 15 Gew.-Teilen einer niedermolekularen oder hochmolekularen Halogenverbindung, insbesondere einer Bromverbindung, bezogen auf jeweils 100 Gew.-Teile aus A + B + C und gegebenenfalls D), wobei jeweils der Halogengehalt resultierend aus den Komponenten A) + D), zwischen 3 Gew.-% und 10 Gew.-%, bezogen auf das Gesamtgewicht der Komponenten A) + D), betragen soll, die dadurch gekennzeichnet sind, daß sie zusätzlich

E) 1 bis 15 Gew.-Teile, vorzugsweise 2 bis 12 Gew.-Teile einer Phosphorverbindung der Formel (I)

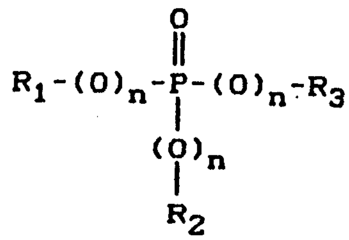 (I)

worin $R_1$, $R_2$ und $R_3$ unabhängig voneinander ein gegebenenfalls halogeniertes $C_1$-$C_8$-Alkyl oder ein gegebenenfalls halogeniertes $C_6$-$C_{20}$-Aryl und "n" 0 oder 1 sind, und

F) 0,05 bis 1 Gew.-Teile, insbesondere 0,1 bis 0,5 Gew.-Teile eines Tetrafluorethylenpolymerisats mit mittleren Teilchengrößen von 0,05 bis 20 µm enthalten und einer Dichte von 1,2 bis 1,9 $g/cm^3$,

wobei sich die Gew.-Teile der Komponenten E) und F) jeweils auf 100 Gew.-Teile der Summe der Komponenten A) + B) + C) und gegebenenfalls D) beziehen und

wobei die Komponente F) in Form einer koagulierten Mischung von Emulsionen der Tetrafluorethylenpolymerisate F) mit Emulsionen von zusätzichen Mengen an Pfropfpolymerisaten B) von maximal 4 Gew.-Teilen, mindestens jedoch 0,1 Gew.-Teile, bezogen auf 100 Gew.-Teile der Summe der Komponente A) + B) + C) und gegebenenfalls D), eingesetzt wird.

Diese Formmassen, und insbesondere die thermoplastischen Polycarbonate, können Halogen eingebaut enthalten.

In Weiterentwicklung dieser Formmassen konnte nun gefunden werden, daß halogenfreie Formmassen dieser Art, in denen die Pfropfpolymerisate B) auf solche aus Styrol, α-Methylstyrol oder Mischungen daraus und aus Acrylnitril und/oder Methacrylnitril auf Dienkautschuke und die Copolymerisate C) auf solche aus Maleinsäureanhydrid mit Styrol, α-Methylstyrol kernalkylierten Styrolen oder mit Mischungen dieser genannten Styrole limitiert sind, die Einarbeitung von Polytetrafluorethylenpolymerisaten ohne vorherige Koagulation mit Pfropfpolymerisaten erfolgen kann, und hierbei Formmassen erhalten werden, die sich durch hohe Flammwidrigkeit und hohe mechanische Festigkeit auszeichnen.

Gegenstand der vorliegenden Erfindung ist somit ein Verfahren zur Herstellung von halogenfreien, schwerbrennbaren Formmassen bestehend aus

A) 40 bis 95 Gew.-Teilen, bezogen auf 100 Gew.-Teile A) + B) + C), eines thermoplastischen halogenfreien aromatischen Polycarbonats,

B) 5 bis 30 Gew.-Teilen, bezogen auf 100 Gew.-Teile A) + B) + C), eines halogenfreien "ABS"-Pfropfpolymerisats erhältlich aus

20 bis 90 Gew.-% eines Gemisches aus

a) 95 bis 50 Gew.-% Styrol, p-Methylstyrol, α-Methylstyrol oder Mischungen daraus und

b) 5 bis 50 Gew.-% Acrylnitril und/oder Methacrylnitril auf

80 bis 10 Gew.-% eines Dienkautschuks,

C) 10 bis 30 Gew.-Teilen, bezogen auf 100 Gew.-Teile A) + B) + C), eines halogenfreien, statistisch aufgebauten Copolymerisats aus

C)1) 5 bis 30 Gew.-% Maleinsäureanhdyrid und

C)2) 95 bis 70 Gew.-% Styrol, α-Methylstyrol, kernalkylierten Styrolen oder Mischungen dieser genannten Styrole,

D) 1 bis 20 Gew.-Teilen, bezogen auf 100 Gew.-Teile Gesamtgewicht aus A) + B) + C), einer halogenfreien Phosphorverbindung der Formel (I)

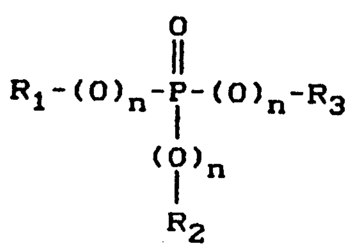

(I)

worin $R_1$, $R_2$ und $R_3$ unabhängig voneinander ein $C_1$-$C_8$-Alkyl oder ein gegebenenfalls alkylsubstiutiertes $C_6$-$C_{20}$-Aryl sind und "n" für Null oder 1 steht, wobei auch zwei der Indices "n" 1 und der dritte Null sein kann,

E) 0,05 bis 5 Gew.-Teile, bezogen auf 100 Gew.-Teile Gesamtgewicht aus A) + B) + C), eines Tetrafluorethylenpolymerisats, und gegebenenfalls

F) Stabilisatoren, Pigmenten, Fließmitteln, Entformungsmitteln und/oder Antistatika,

das dadurch gekennzeichnet ist, daß man die Komponenten A), B), C), D), E) und gegebenenfalls mindestens einen der Zusätze aus der Gruppe F) entweder bei üblichen Temperaturen in bekannten Mischaggregaten mischt und danach bei Temperaturen von 220° C bis 330° C in bekannter Weise schmelzcompoundiert oder schmelzextrudiert oder die Komponenten A) bis E) und gegebenenfalls mindestens einen der Zusätze aus der Gruppe F) in organischen Lösungsmitteln löst, diese Lösungen mischt und die Lösungsgemische dann in bekannter Weise eindampft.

Die nach dem erfindungsgemäßen Verfahren erhältlichen Formmassen sind gegenüber konventionellen Dreikomponentensystemen aus Polycarbonaten, Styrolmaleinsäureanhydrid-Copolymeren und ABS-Pfropfpolymeren (siehe beispielsweise DE-OS 3 130 774) durch ein verbessertes Brandverhalten ausgezeichnet.

Erfindungsgemäß geeignete, thermoplastische, halogenfreie aromatische Polycarbonate gemäß Komponente A) sind solche auf Basis der Diphenole der Formel (II)

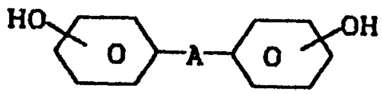

(II) ,

worin A eine Einfachbindung, ein $C_1$-$C_5$-Alkylen, $C_2$-$C_5$-Alkyliden, ein $C_5$-$C_6$-Cycloalkyliden, -S- oder -$SO_2$- sind.

Geeignete Diphenole der Formel (II) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan oder 1,1-Bis-(4-hydroxyphenyl)-ccylohexan.

Bevorzugte Diphenole der Formel (II) sind 2,2-Bis-(4-hydroxyphenyl)-propan und 1,1-Bis-(4-hydroxyphenyl)-cyclohexan.

Die Diphenole der Formel (II) sind entweder literaturbekannt oder nach literaturbekannten Verfahren herstellbar.

Die Herstellung der erfindungsgemäß geeigneten Polycarbonate gemäß Komponente A) ist literaturbekannt und kann beispielsweise mit Phosgen nach dem Phasengrenzflächenverfahren oder mit Phosgen nach dem Verfahren in homogener Phase (dem sogenannten Pydridinverfahren) erfolgen, wobei das jeweils einzustellende Molekulargewicht in bekannter Weise durch eine entsprechende Menge an bekannten Kettenabbrechern erzielt wird.

Die erfindungsgemäß geeigneten Polycarbonate gemäß Komponente A) haben mittlere Molekulargewichte ($\bar{M}_w$, gemessen beispielsweise durch Ultrazentrifugation oder durch Streulichtmessung) von 10 000 bis 100 000, vorzugsweise von 20 000 bis 80 000.

Die erfindungsgemäß geeigneten Polycarbonate gemäß Komponente A) sind sowohl Homopolycarbonate als auch Copolycarbonate.

Die erfindungsgemäß geeigneten Polycarbonate gemäß Komponente A) können in bekannter Weise verzweigt sein, und zwar vorzugsweise durch Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Erfindungsgemäß geeignete halogenfreie "ABS"-Pfropfpolymerisate gemäß Komponente B) können dadurch hergestellt werden, daß Monomerenmischungen, bestehend aus 95 bis 50 Gew.-% Styrol, p-Methylstyrol, α-Methylstyrol oder Mischungen daraus, und 5 bis 50 Gew.-% Acrlynitril, Methacrylnitril oder Mischungen daraus in Gegenwart eines Dienkautschuks polymerisiert werden.

Vorzugsweise werden Gemische aus Styrol und Acrylnitril polymerisiert.

Die Polymerisation in Anwesenheit des Dienkautschuks führt dazu, daß zumindest ein Teil der Monomeren chemisch auf den Dienkautschuk aufgepfropft ist und außerdem daneben nichtgepfropftes Copolymerisat entsteht.

Dienkautschuke im Sinne der Erfindung sind insbesondere Polybutadien, Butadien-Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines niederen Alkylesters von Acryl- oder Methacrylsäure (z.B. Methacrylat, Ethylacrylat, Methylmethacrylat und Ethylmethacrylat).

Die "ABS"-Pfropfpolymerisate gemäß Komponente B) können in bekannter Weise durch radikalische Polymerisation der Monomeren in Gegenwart des Dienkautschuks in Substanz, Emulsion, Suspension sowie durch kombinierte Verfahren wie Masse/Suspensionspolymerisation oder Lösungs/Fällungspolymerisation erhalten werden. So können beispielsweise Pfropfpolymerisate auf Basis von Polybutadien durch Polymerisation der Monomeren wie Styrol und Acrlynitril in Anwesenheit eines Latex des Butadienpolymerisats hergestellt werden. Die Polymerteilchen in dem Latex des Butadienpolymerisats weisen im allgemeinen eine Größe im Bereich von 0,2 µm bis 5 µm auf.

Es ist auch möglich, Pfropfpolymerisate durch Emulsionspolymerisation zu erzeugen, bei denen die Polymerteilchen des Butadienpolymerisats eine Größe im Bereich von 0,05 bis 0,8 µm aufweisen.

Die Pfropfpolymerisate B) können auch dadurch erhalten werden, daß man den Kautschuk in den Monomeren, beispielsweise in Styrol und Acrlynitril, löst, die Polymerisation durch Erhitzen und Zugabe von Radikalbildnern auslöst, nach einem bestimmten Monomerumsatz durch Zugabe von Wasser eine Suspension erzeugt und als Perlpolymerisation die Reaktion zu Ende führt. Solch ein Verfahren ist beispielsweise in DT-AS 1 245 131 beschrieben.

Die erfindungsgemäß geeigneten halogenfreien Copolymerisate gemäß Komponente C) können bevorzugt durch eine kontinuierliche Masse- oder Lösungspolymerisation bei unvollständigen Umsätzen aus den entsprechenden Monomeren hergestellt werden.

Die Anteile der beiden Komponenten C)1) und C)2) im Copolymerisat C) liegen bevorzugt zwischen 10 und-25 Gew.-% für C)1) und 90 bis 75 Gew.-% für C)2).

Als C)2) geeignete kernalkylierte Styrole sind beispielsweise Vinyltoluol und 2,4-Dimethylstyrol.

Die Molekulargewichte der Copolymerisate C) können über einen weiten Bereich variieren. Bevorzugt ist für diese Produkte eine Grenzviskositätszahl von 0,4-0,9, gemessen in Dimethylformamid bei 25°C (siehe hierzu: Hoffmann, Krömer, Kuhn, Polymeranalytik I, Stuttgart 1977, S. 316 ff).

Die erfindungsgemäß geeigneten halogenfreien Phosphorverbindungen gemäß Komponente D) sind generell bekannt (siehe beispielsweise Ullmann, Enzyklopädie der technischen Chemie, Bd. 18, S 301 ff, 1979; Houben-Weyl, Methoden der organischen Chemie, Bd. 12/1, S. 43, S. 136; Beilstein, Bd. 6, S. 177).

Erfindungsgemäß geeignete Phosphorverbindungen gemäß Komponente D), Formel (I), sind beispielsweise Triphenylphosphat, Trikresylphosphat, Diphenyl-2-ethylkresylphosphat, Diphenyl-kresylphosphat, Tri-(isopropylphenyl)-phosphat, Methanphosphonsäure-diphenylester, Phenylphosphonsäure-diphenylester, Triphenylphosphinoxid oder Trikresylphosphinoxid.

Die erfindungsgemäßen geeigneten Tetrafluorethylenpolymerisate gemäß Komponente E) sind Polymere mit Fluorgehalten von 65-76 Gew.-%, vorzugsweise 70-76 Gew.-%. Beispiele sind Polytetrafluorethylen, Tetrafluorethylen-Hexafluorpropylen-Copolymere oder Tetrafluorethylen-Copolymerisate mit geringen Mengen fluorfreier copolymerisierbarer ethylenisch ungesättigter Monomerer.

Diese Polymerisate sind bekannt. Sie können nach bekannten Verfahren hergestellt werden, so beispielsweise durch Polymerisation von Tetrafluorethylen in wäßrigem Medium mit einem freie Radikale bildenden Katalystor, beispielsweise Natrium-, Kalium- oder Ammoniumperoxidisulfat bei Drücken von 7 bis 70 $kg/cm^2$ und bei Temperaturen von 0 bis 200$^0$C, vorzugsweise bei Temperaturen von 20 bis 100$^0$C (US-Patent 2 534 058). Die aus so hergestellten Suspensionen oder Emulsionen durch Koagulation oder durch Fällung und gegebenenfalls durch anschließendes Mahlen erhaltenen Polytetrafluorethylen-Pulver besitzen durchschnittliche Korngrößen zwischen 100 und 800 $\mu m$.

Ein geeignetes Polytetrafluorethylen ist beispielsweise Hostaflon TF 2026® der Fa. Hoechst.

Die Tetrafluorethylenpolymerisate können Molekulargewichte zwischen 50 000 und 10 000 000 besitzen ($M_n$ Gewichtsmittelmolekulargewichte ermittelt durch Endgruppenbestimmung gemäß R.C. Doban, 130. Meeting der American. Chemical. Society, Atlantic City, September 1956).

Geeignete Mischaggregate für die Durchführung des erfindungsgemäßen Verfahrens sind beispielsweise übliche Taumelmischer oder Rührwerksmischer.

Geeignete Aggregate für die Schmelzcompoundierung sind beispielsweise diskontinuierlich arbeitende, beheizte Innenkneter mit oder ohne Stempel, kontinuierlich arbeitende Innenkneter, Schneckenkneter mit axial oszillierenden Schnecken, Zweiwellenextruder sowie Mischwalzwerke mit beheizten Walzen.

Geeignete Aggregate für die Schmelzextrusion sind beispielsweise Ein- und Zweiwellenextruder.

Geeignete organische Lösungsmittel für die Komponenten A) bis E) und die Zusätze der Gruppe F) sind beispielsweise Chlorbenzol, Gemische aus Chlorbenzol und Methylenchlorid oder Gemische aus Chlorbenzol und aromatischen Kohlenwasserstoffen, z.B. Toluol.

Das Eindampfen der Lösungsmittelgemische gemäß dem erfindungsgemäßen Verfahren kann beispielsweise in Eindampfextrudern erfolgen.

Geeignete Stabilisatoren, Pigmente, Fließmittel, Entformungsmittel und Antistatika sind die für thermoplastische Polycarbonate, Pfropfpolymerisate beziehungsweise Copolymerisate üblichen.

Die nach dem erfindungsgemäßen Verfahren erhaltenen Formmassen können zur Herstellung von Formkörpern jeder Art verwendet werden. Beispiele für herstellbare Formkörper sind: Gehäuseteile jeder Art, beispielsweise Haushaltsgeräte und Büromaschinen, oder Abdeckplatten für den Bausektor und Teile für den KFZ-Sektor.

Die erfindungsgemäß erhaltenen Formmassen und daraus hergestellte Formkörper können außerdem auf dem Gebiet der Elektrotechnik eingesetzt beenden.

Eine weitere Form der Verarbeitung der erfindungsgemäß erhaltenen Formmassen ist die Herstellung von Formkörpern durch Tiefziehen oder Warmformen zuvor durch Extrusion hergestellter Platten oder Folien.

Beispiele

Eingesetzte Legierungskomponenten:

A) Polycarbonat aus 2,2-Bis-(4-hydroxyphenyl)-propan (Bisphenol A) mit einer relativen Lösungsviskosität von 1,320, gemessen in Methylenchlorid bei 23°C und einer Konzentration von 0,5 Gew.-%.

B) Die Herstellung der ABS-Pfropfpolymerisate geschieht durch Polymerisation von Styrol und Acrlynitril auf Polybutadien gemäß den Angaben der deutschen Auslegeschriften 1 247 665 und 1 269 360 über eine Emulsionspolymerisation, wobei der mittlere Teilchendurchmesser der in Latexform vorliegenden Polybutadienpfropfgrundlage zwischen 0,1 und 0,4 µm liegt. Die Zusammensetzungen der in den Beispielen genannten ABS-Pfropfcopolymerisate gehen aus Tabelle 2 hervor:

| | Styrol (Gew.-%) | Acrylnitril (Gew.-%) | Polybutadien (Gew.-%) |
|---|---|---|---|
| B1 | 45 | 5 | 50 |
| B2 | 18 | 7 | 75 |

C) Herstellung der Styrol-Maleinsäureanhydrid-Copolymeren:

In einem ummantelten Gefäß, das mit Innenthermometer, Rührer, Ein- und Auslaß versehen ist, werden 750 Teile eines Gemisches mit einer Zusammensetzung gemäß Tabelle 1 vorgelegt und auf 130° C erwärmt. Dann wird ein Monomerstrom von 1100 Teilen derselben Zusammensetzung so zudosiert und gleichzeitig dieselbe Menge an Polymerlösung dem Gefäß entnommen, daß der Füllstand im Gefäß gehalten wird. Dem Monomerstrom werden kontinuierlich ca. 0,05 Teile pro Stunde tert.-Butylperpivalat (75 %ig in Dibutylphthalat) zugefügt. Nach ca. 2 Stunden hat sich ein konstanter Umsatz von ca. 40 % eingestellt. Die Polymerlösung wird mit 0,1 Gew.-% 2,6-Di-t-butyl-p-kresol versetzt und anschließend auf einem Ausdampfextruder von Monomeren und flüchtigen Bestandteilen befreit. Die jeweligen Grenzviskositätszahlen, bestimmt durch Messung in Dimethylformamid (DMF) bei 25° C, sind in Tabelle 1 aufgeführt.

Tabelle 1

| | Einsatzmonomere (Gew.-%) | | Copolymerisat (Gew.-%) | | Grenzviskositätszahl des Copolymerisats |
|---|---|---|---|---|---|
| | Styrol | Maleinsäureanhydrid | Styrol | Maleinsäureanhydrid | |
| C1 | 93,8 | 6,2 | 84,5 | 15,5 | 0,514 |
| C2 | 92,0 | 8,0 | 80,0 | 20,0 | 0,503 |

D) Diphenyl-kresylphosphat, Schmelzbereich -35 bis -45° C

E) Polytetrafluorethylen, Fluorgehalt 76 %, Korngröße 550 µm, Molekulargewicht $\bar{M}n$ 600 000, ermittelt durch Endgruppenbestimmung.

Die Compoundierung der Komponenten A), B1), B2), C1), C2), D) und E) erfolgte auf einem Doppelwellenextruder (ZSK 32 der Fa. Werner + Pfleiderer) bei Temperaturen zwischen 220 und 250° C.

Die Herstellung der Formkörper erfolgte auf einer Schneckenspritzgießmaschine bei 250° C.

Das Brandverhalten der Proben wurde nach UL-Subj. 94 V bei einer Prüfkörperdicke von 3,2 mm gemessen. Der UL 94 V-Test wird wie folgt durchgeführt:

Substanzproben werden zu Stäben der Abmessungen 127 x 12,7 x 3,2 mm geformt. Die Stäbe werden vertikal so montiert, daß die Unterseite des Probekörpers sich 305 mm über einem Streifen Verbandsstoff befindet. Jeder Probestab wird einzeln mittels zweier aufeinanderfolgender Zündvorgänge von je 10 sec Dauer entzündet. Die Brenneigenschaften nach jedem Zündvorgang werden beobachtet und danach die Probe bewertet. Zum Entzünden der Probe wird ein Bunsenbrenner mit einer 10 mm (3/8 inch) hohen blauen Flamme von Erdgas mit einem Wärmeinhalt von $3,73 \times 10^4$ kJ/m³ (1,000 BTU per cubic foot) benutzt.

Die UL 94 V-O-Klassifizierung umfaßt die nachstehend beschriebenen Eigenschaften von Materialien, die gemäß der UL-94-Vorschrift geprüft werden. Die Materialien in dieser Klasse enthalten keine Proben, die länger als 10 sec nach jeder Einwirkung der Testflamme brennen; sie zeigen keine Gesamtflammzeit von mehr als 50 sec bei der zweimaligen Flammeinwirkung auf jeden Probensatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 sec nach Entfernen der Testflamme glimmen.

Andere UL 94-Klassifizierungen bezeichnen Proben, die eine längere Nachbrennzeit aufweisen (Klassifizierung V-1) oder die außerdem brennende Tropfen oder Teilchen abgeben, die die unterhalb der Probe angeordnete Watte entzünden (Klassifizierung V-2): die Klassifizierung n.b. heißt "nicht bestanden" und bedeutet, daß die Proben eine Nachbrennzeit von $\geq$ 30 sec aufweisen.

Aus der folgenden Tabelle 3 können die genauen Zusammensetzungen der geprüften Formmassen sowie die erhaltenen UL 94-Klassifizierungen entnommen werden.

Tabelle 3

| | A (Gew.-Tle.) | B1 (Gew.-Tle.) | B2 (Gew.-Tle.) | C1 (Gew.-Tle.) | C2 (Gew.-Tle.) | D (Gew.-Tle.) | E (Gew.-Tle.) | UL 94 (3,2mm) |
|---|---|---|---|---|---|---|---|---|
| Vergleichsversuche | | | | | | | | |
| V1 | 63,7 | 15 | | 21,3 | | | | n.b. |
| V2 | 68,8 | 14 | | | 17 | | | n.b. |
| V3 | 72,5 | 9 | | | 18 | | | n.b. |
| V4 | 73,6 | | 8 | | 18,4 | | | n.b. |
| Versuche gemäß der vorliegenden Erfindung | | | | | | | | |
| E1 | 63,7 | 15 | | 21,3 | | 10 | 0,3 | V-1 |
| E2 | 63,8 | 14 | | | 17 | 10 | 0,3 | V-1 |
| E3 | 72,5 | 9 | | | 18 | 10 | 0,3 | V-0 |
| E4 | 73,6 | | 8 | | 18,4 | 10 | 0,3 | V-0 |

## Patentansprüche

1. Verfahren zur Herstellung von halogenfreien, schwerbrennbaren Formmassen bestehend aus

A) 40 bis 95 Gew.-Teilen, bezogen auf 100 Gew.-Teile A) + B) + C), eines thermoplastischen halogenfreien aromatischen Polycarbonats,

B) 5 bis 30 Gew.-Teilen, bezogen auf 100 Gew.-Teile A) + B) + C), eines halogenfreien "ABS"-Pfropfpolymerisats erhältlich aus

20 bis 90 Gew.-% eines Gemisches aus

a) 95 bis 50 Gew.-% Styrol, p-Methylstyrol, α-Methylstyrol oder Mischungen daraus und

b) 5 bis 50 Gew.-% Acrylnitril und/oder Methacrylnitril auf

80 bis 10 Gew.-% eines Dienkautschuks,

C) 10 bis 30 Gew.-Teilen, bezogen auf 100 Gew.-Teile A) + B) + C), eines halogenfreien, statistisch aufgebauten Copolymerisats aus

C)1) 5 bis 30 Gew.-% Maleinsäureanhdyrid und

C)2) 95 bis 70 Gew.-% Styrol, α-Methylstyrol, kernalkylierten Styrolen oder Mischungen dieser genannten Styrole,

D) 1 bis 20 Gew.-Teilen, bezogen auf 100 Gew.-Teile Gesamtgewicht aus A) + B) + C), einer halogenfreien Phosphorverbindung der Formel (I)

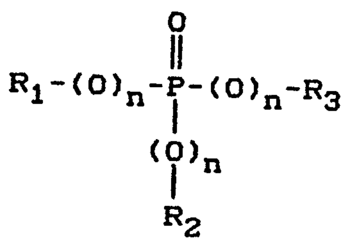

(I)

worin $R_1$, $R_2$ und $R_3$ unabhängig voneinander ein $C_1$-$C_8$-Alkyl oder ein gegebenenfalls alkylsubstiutiertes $C_6$-$C_{20}$-Aryl sind und "n" für Null oder 1 steht, wobei auch zwei der Indices "n" 1 und der dritte Null sein kann,

E) 0,05 bis 5 Gew.-Teile, bezogen auf 100 Gew.-Teile Gesamtgewicht aus A) + B) + C), eines Tetrafluorethylenpolymerisats, und gegebenenfalls

F) Stabilisatoren, Pigmenten, Fließmitteln, Entformungsmitteln und/oder Antistatika,

dadurch gekennzeichnet, daß man die Komponenten A), B), C), D), E) und gegebenenfalls mindestens einen der Zusätze aus der Gruppe F bei üblichen Temperaturen in bekannten Mischaggregaten mischt und danach bei Temperaturen von 220°C bis 330°C in bekannter Weise schmelzkompoundiert oder schmelzextrudiert.

2. Verfahren zur Hertellung der halogenfreien, schwerbrennbaren Formmassen des Anspruchs 1, dadurch gekennzeichnet, daß man die Komponenten A), B), C), D), E) und gegebenenfalls mindestens einen der Zusätze aus der Gruppe F) in organischen Lösungsmitteln löst, diese Lösungen mischt und die Lösungsgemische dann in bekannter Weise eindampft.